(19) Europäisches Patentamt / European Patent Office / Office européen des brevets

(11) **EP 3 200 543 B1**

(12) **EUROPEAN PATENT SPECIFICATION**

(45) Date of publication and mention
of the grant of the patent:
**09.08.2023 Bulletin 2023/32**

(21) Application number: **15844229.3**

(22) Date of filing: **17.09.2015**

(51) International Patent Classification (IPC):
*H04W 74/00* (2009.01)   *H04W 74/08* (2009.01)

(52) Cooperative Patent Classification (CPC):
**H04W 74/0833; H04W 74/006**

(86) International application number:
**PCT/CN2015/089847**

(87) International publication number:
**WO 2016/045532 (31.03.2016 Gazette 2016/13)**

(54) **METHOD FOR CONFIGURING RANDOM ACCESS RESPONSE WINDOW, BASE STATION AND USER EQUIPMENT**

VERFAHREN ZUR KONFIGURATION EINES DIREKTZUGRIFFS-ANTWORTFENSTERS, BASISSTATION UND BENUTZERVORRICHTUNG

PROCÉDÉ POUR CONFIGURER UNE FENÊTRE DE RÉPONSE D'ACCÈS ALÉATOIRE, STATION DE BASE ET ÉQUIPEMENT D'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2014 CN 201410502743**

(43) Date of publication of application:
**02.08.2017 Bulletin 2017/31**

(73) Proprietor: **Sharp Kabushiki Kaisha**
**Sakai City, Osaka 590-8522 (JP)**

(72) Inventors:
• **LIU, Renmao**
**Shanghai 201203 (CN)**
• **WANG, Feng**
**Shanghai 201206 (CN)**
• **JIANG, Qi**
**Shanghai 201206 (CN)**

(74) Representative: **Müller-Boré & Partner**
**Patentanwälte PartG mbB**
**Friedenheimer Brücke 21**
**80639 München (DE)**

(56) References cited:
**EP-A1- 3 026 830       EP-A1- 3 131 342**
**WO-A1-2014/110805    CN-A- 102 870 486**
**CN-A- 102 917 433**

• **LG ELECTRONICS: "RACH procedure for coverage enhancement of MTC UEs", 3GPP DRAFT; R1-134393 MTC_RACH FOR CE (FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717518, Retrieved from the Internet: URL:http://www.3gpp.org/ftp/tsg_ran/WG1_RL 1/TSGR1_74b/Docs/ [retrieved on 2013-09-28]**
• **ERICSSON: "Impact of coverage enhancements on RAN", 3GPP DRAFT; R2-140675 - IMPACT OF COVERAGE ENHANCEMENTS ON RAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050791977, Retrieved from the Internet: URL:http://www.3gpp.org/ftp/Meetings_3GPP_ SYNC/RAN2/Docs/ [retrieved on 2014-02-09]**

EP 3 200 543 B1

- **ALCATEL-LUCENT ET AL: "Coverage enhancement for RACH messages", 3GPP DRAFT; R1-140153 - REL-12 MTC - CE FOR RACH MESSAGES V0.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735716, Retrieved from the Internet: URL:http://www.3gpp.org/ftp/Meetings_3GPP_ SYNC/RAN/RAN1/Docs/ [retrieved on 2014-02-09]**
- **ALCATEL -LUCENT ET AL.: 'COVERAGE ENHANCEMENT FOR RACH MESSAGES' 3GPP TSG-RAN WG1 MEETING #76 R1-140153 14 February 2014, XP050735716**
- **ALCATEL-LUCENT ET AL: "PRACH Coverage Enhancement for MTC UE", 3GPP DRAFT; R1-135155 - REL-12 MTC - COVERAGE ENHANCEMENT FOR PRACH V0.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. San Francisco, USA; 20131111 - 20131115 13 November 2013 (2013-11-13), XP050734855, Retrieved from the Internet: URL:http://www.3gpp.org/ftp/Meetings_3GPP_ SYNC/RAN/RAN1/Docs/ [retrieved on 2013-11-13]**
- **ALCATEL-LUCENT ET AL: "Coverage enhancement for RACH", 3GPP DRAFT; R2-140726 - RACH MESSAGES V0.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050792016, Retrieved from the Internet: URL:http://www.3gpp.org/ftp/Meetings_3GPP_ SYNC/RAN2/Docs/ [retrieved on 2014-02-09]**

**Description**

**TECHNICAL FIELD**

The present disclosure relates to wireless communications, and more particularly, to a method for configuring random access response window, a base station and a User Equipment (UE).

**BACKGROUND**

With the rapid growth of mobile communications and the enormous development of technology, the world is evolving towards a network society with full connectivity. That is, anyone or anything can obtain information and share data anytime and anywhere. It is expected that, by 2020, there will be 50 billion of interconnected devices, among which only 10 billion will be mobile phones and tablet computers, while others are machines that do not interact with human, but with each other. Hence, there is a topic worth comprehensive research regarding how to design the system to support a huge number of machine communication devices.

In the Long Term Evolution (LTE) standard in the 3rd Generation Partner Project (3GPP), such machine-to-machine communication is referred to as Machine Type Communication (MTC). The MTC is a data communication service without human involvement. A large-scale deployment of MTC UEs can be applied to various fields such as security, tracking, payment, measurement, consumer electronics, and in particular to applications such as video surveillance, supply chain tracking, intelligent metering and remote monitoring. The MTC requires low power consumption and supports low data transmission rate and low mobility. Currently, the LTE system is mainly designed for Human-to-Human (H2H) communication services. Hence, in order to achieve the scale benefit and application prospect of the MTC services, it is important for the LTE network to support the MTC devices to operate at low cost.

Further, some MTC devices are mounted in basements of residential buildings or locations protected by insulating films, metal windows or thick walls of traditional buildings. These devices will suffer significantly higher penetration loss in air interface than conventional device terminals, such as mobile phones and tablets, in the LTE network. The 3GPP has started researches on solution designs and performance evaluations for MTC devices with a 20dB of additional coverage enhancement. It is to be noted that an MTC device located in an area with poor network coverage has a very low data transmission rate, a very loose delay requirement and a limited mobility. For these MTC characteristics, some signaling and/or channels of the LTE network can be further optimized to better support the MTC services.

For this purpose, in the 3GPP RAN #64 meetings in June, 2014, a new work item for Rel-13 has been proposed for the low complexity and enhanced coverage MTC (see non-patent document: RP-140990, New Work Item on Even Lower Complexity and Enhanced Coverage LTE UE for MTC, Ericsson, NSN). In the description of this work item, the LTE Rel-13 system shall allow MTC UEs supporting 1.4MHz RF bandwidth in UL/DL (referred to as narrowband MTC UE) to operate over any system bandwidth (e.g., 1.4 MHz, 3 MHz, 5 MHz, 10 MHz, 15 MHz, 20 MHz, etc.) and provide such MTC UEs with coverage enhancement function. A uniform design is desired for low-cost MTC UEs and MTC UEs with coverage enhancement in the system design.

In the conventional LTE network, when an evolved NodeB (eNB) detects a preamble sequence transmitted from a UE, it will transmit, on Physical Downlink Shared Channel (PDSCH), a Random Access Response (RAR), including an index of the detected preamble sequence, time adjustment information for uplink synchronization, an initial uplink resource allocation (for subsequent transmission of msg3) and a Cell-Radio Network Temporary Identifier (C-RNTI).

After transmitting the preamble sequence, the UE needs to use a Random Access - Radio Network Temporary Identifier (RA-RNTI) for monitoring Physical Downlink Control Channel (PDCCH) within a RAR window, so as to receive the RAR message. Here,

$$RA\text{-}RNTI = 1 + t\_id + 10 * f\_id$$

where:

t_id denotes an index of the first subframe of Physical Random Access Channel (PRACH) for transmitting the preamble, $(0 \leq t\_id < 10)$;
f_id denotes a frequency domain position index of PRACH within that subframe $(0 \leq f\_id < 6)$. For FDD systems, f_id is always zero as there is only one frequency domain position. There is a one-to-one correspondence between RA-RNTIs and time-frequency positions at which the UE transmits the preamble sequence. The UE and the eNB can calculate the RA-RNTI value corresponding to the preamble sequence individually. The UE can receive the RAR message based on the calculated RA-RNTI value. If the preamble sequence index in the RAR is the same as the preamble sequence transmitted by the UE itself, the UE can adopt the uplink time adjustment information in the RAR and initiate a corresponding collision resolution procedure.

The RAR window has a length of ra-ResponseWindowSize subframes, starting with the subframe in which the UE transmits the preamble sequence + 3 subframes. For the definition of ra-ResponseWindowSize, reference can be made to Table 1. If the UE fails to receive any RAR as a reply within the period of the RAR window, it considers this as an unsuccessful access. In the RAR message, there may be a back-off indicator (backoffindicator), indicating a time range in which the UE shall wait before retransmitting the preamble. If a particular access has failed, the UE needs to wait a time period before it can perform the next preamble access. This time period is indicated by backoffindicator. The UE can select a value randomly in the range from 0 to backoffindicator. In this way, the probability that the colliding UEs may retransmit the preamble sequence simultaneously again can be reduced.

## Table 1 - RACH-ConfigCommon Information Element

```
-- ASN1START

RACH-ConfigCommon ::=        SEQUENCE {
     preambleInfo                         SEQUENCE {
          numberOfRA-Preambles               ENUMERATED {
                                                  n4, n8, n12, n16 ,n20, n24, n28,
                                                  n32, n36, n40, n44, n48, n52, n56,
                                                  n60, n64},

          preamblesGroupAConfig              SEQUENCE {
               sizeOfRA-PreamblesGroupA        ENUMERATED {
                                                  n4, n8, n12, n16 ,n20, n24, n28,
                                                  n32, n36, n40, n44, n48, n52, n56,
                                                  n60},

               messageSizeGroupA               ENUMERATED {b56, b144, b208, b256},
               messagePowerOffsetGroupB        ENUMERATED {
                                                  minusinfinity, dB0, dB5, dB8, dB10,
dB12,

                                                  dB15, dB18},

               ...
          }                  OPTIONAL                                        -- Need
OP
     },
     powerRampingParameters              PowerRampingParameters,
     ra-SupervisionInfo                  SEQUENCE {
          preambleTransMax                   PreambleTransMax,
          ra-ResponseWindowSize              ENUMERATED {
                                                  sf2, sf3, sf4, sf5, sf6, sf7,
                                                  sf8, sf10},

          mac-ContentionResolutionTimer      ENUMERATED {
                                                  sf8, sf16, sf24, sf32, sf40, sf48,
                                                  sf56, sf64}
     },
     maxHARQ-Msg3Tx                      INTEGER (1..8),
     ...
}

RACH-ConfigCommonSCell-r11 ::=      SEQUENCE {
     powerRampingParameters-r11             PowerRampingParameters,
     ra-SupervisionInfo-r11                 SEQUENCE {
          preambleTransMax-r11                 PreambleTransMax
     },
     ...
}

PowerRampingParameters ::=          SEQUENCE {
     powerRampingStep                    ENUMERATED {dB0, dB2,dB4, dB6},
     preambleInitialReceivedTargetPower  ENUMERATED {
                                              dBm-120, dBm-118, dBm-116, dBm-114, dBm-112,
                                              dBm-110, dBm-108, dBm-106, dBm-104, dBm-102,
                                              dBm-100, dBm-98, dBm-96, dBm-94,
                                              dBm-92, dBm-90}
}

PreambleTransMax ::=                ENUMERATED {
                                         n3, n4, n5, n6, n7, n8, n10, n20, n50,
                                         n100, n200}

-- ASN1STOP
```

| RACH-ConfigCommon Field Description |
| --- |
| ... |
| **ra-ResponseWindowSize**<br>Duration of RAR window. In 3GPP TS 36.321. its value is indicated in units of subframes. The value sf2 corresponds to 2 subframes; the value sf3 corresponds to 3 subframes, and so on. The same value applies to each serving cell (although associated functions are performed individually for each cell). |
| ... |

For an MTC UE with coverage enhancement, it is desired to increase received signal strength of a physical channel for the MTC UE by utilizing enhancement techniques. In the discussion about MTC in Rel-12, the received signal strength of MTC physical channels is increased mainly by means of subframe bundling or repetitive transmissions. MTC UEs at different geographical locations may require different coverage enhancement levels. Accordingly, the MTC UEs in one single cell can be divided into a number of different coverage enhancement levels requiring different numbers of repetitive transmissions, respectively. A coverage enhancement level can also be represented as a repetition level. For example, PRACHs for MTC UEs with coverage enhancement can be divided into four repetition levels, 0, 1, 2 and 3, corresponding to 0dB, 5dB, 10dB and 15 dB of coverage enhancement, respectively. A time interval from a transmission starting subframe to a transmission ending subframe for a particular repetition level is referred to as a repetition window. Then, different repetition levels will have different sizes of repetition windows. A PRACH repetition window for a particular repetition level has RAR transmissions corresponding to the repetition level.

When compared with the conventional LTE system, the Rel-13 LTE system supporting coverage enhanced MTC has a different time granularity for physical channel transmission for MTC UEs with coverage enhancement. The conventional system measures a transmission in time units of subframes, whereas the time granularity for physical channel transmission for coverage enhanced MTC is a repetition window. Hence, for the coverage enhanced MTC, it is desired to reconsider the design of RAR window for MTC UEs with coverage enhancement.

Art. 54(3) EPC document EP 3 131 342 A1 describes a random access method including: determining whether a first preset condition is met, where the first preset condition includes: a difference between a maximum transmit power allowed by the user equipment and a power of sending the random access code in a previous random access attempt process is less than or equal to a power ramping factor, and/or, the previous random access attempt process fails; and if the first preset condition is met, sending the random access code by using an enhancement mode in the current random access attempt process. According to the random access method, the random access apparatus, and the user equipment that are provided in the embodiments of the present invention, a success rate of receiving, by a network device, the random access code sent by the user equipment can be increased, and signal transmission reliability can be improved.

Art. 54(3) EPC document EP 3 026 830 A1 describes a method for transreceiving a signal in a wireless communication system supporting repeated transmission of a same signal, and an apparatus for same, and more specifically, to a method and an apparatus for same, the method comprising the steps of: repeatedly transmitting a first physical random access channel (PRACH) signal by using a first PRACH resource, wherein the number of transmissions equal a first repetition number; receiving a random access response (RAR) with respect to the first PRACH signal; and transmitting a second PRACH signal for requesting scheduling, wherein a plurality of PRACH resources are pre-established for transmitting the second PRACH signal, a second plurality of repetition numbers that are different are pre-established for the plurality of PRACH resources, wherein the second PRACH signal is repeatedly transmitted by using the first PRACH resource, wherein the number of transmissions equal a repetition number set for the first PRACH resource, when the first PRACH resource matches one of the plurality of PRACH resources, and wherein the second PRACH signal is repeatedly transmitted by using a PRACH resource corresponding to the first repetition number from among the plurality of PRACH resources, wherein the number of transmissions equal the first repetition number, when the first repetition number matches one of the second plurality of repetition numbers.

LG ELECTRONICS, "RACH procedure for coverage enhancement of MTC UEs", vol. RAN WG1, no. Guangzhou, China; 07 to 11 October 2013, 3GPP DRAFT; R1-134393 MTC_RACH FOR CE (FINAL), 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE), discusses RACH procedure for coverage enhancement of MTC UEs, proosing that in order to support repetition of the RAR, relevant information, such as repetition number for RAR and corresponding PDCCH being preconfigured via SIB.

ERICSSON, "Impact of coverage enhancements on RAN", vol. RAN WG2, no. Prague, Czech Republic; 10 to 14 February 2014, 3GPP DRAFT; R2-140675 - IMPACT OF COVERAGE ENHANCEMENTS ON RAN, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, discusses impacts of coverage enhancements for MTC in L1 by means of repetition upon RAN2 procedures.

ALCATEL-LUCENT ET AL, "Coverage enhancement for RACH messages", vol. RAN WG1, no. Prague, Czech Republic; 10 to 14 February 2014, 3GPP DRAFT; R1-140153 - REL-12 MTC - CE FOR RACH MESSAGES V0.2, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, discusses considerations for RAR, Message 3 and Message 4, proposing RAR resource allocation being indicated using PDCCH, and the start of PDCCH repetition for RAR occurring at the first valid starting point for the relevant PDCCH repetition level, after a fixed delay $T_{RAR}$ (e.g. 1 radio frame) after the end of the PRACH preamble repetition.

## SUMMARY

There is provided a user equipment, a base station, a method performed by a user equipment and a method performed by a base station as defined in claims 1, 3, 5 and 6, respectively. Preferred embodiments are set forth in the dependent clams.

## BRIEF DESCRIPTION OF THE DRAWINGS

The above and other objects, features and advantages will be more apparent from the following description of embodiments with reference to the figures, in which:

Fig. 1    shows a block diagram of a base station according to an embodiment of the present disclosure;
Fig. 2    shows a block diagram of a UE according to an embodiment of the present disclosure;
Fig. 3    is a schematic diagram showing different sizes of RAR windows configured for different coverage enhancement levels of repetition windows according to the present disclosure;
Fig. 4    is a schematic diagram showing different sizes of RAR windows configured for different coverage enhancement levels of subframes according to the present disclosure;
Fig. 5    is a schematic diagram showing the same size of RAR windows configured for different coverage enhancement levels of repetition windows according to the present disclosure;
Fig. 6    is a schematic diagram showing the same size of RAR windows configured for different coverage enhancement levels of subframes according to the present disclosure;
Fig. 7    is a flowchart illustrating a method performed by a base station according to the present disclosure; and
Fig. 8    is a flowchart illustrating a method performed by a UE according to the present disclosure.

## DETAILED DESCRIPTION

In the following, preferred embodiments of the present disclosure will be described in detail with reference to the drawings. It should be noted that the following embodiments are illustrative only, rather than limiting the scope of the present disclosure. In the following description, details of well known techniques which are not directly relevant to the present invention will be omitted so as not to obscure the concept of the invention.

In the following, a number of embodiments of the present invention will be detailed in an exemplary application environment of LTE mobile communication system and its subsequent evolutions. Herein, it is to be noted that the present invention is not limited to the application exemplified in the embodiments. Rather, it is applicable to other communication systems, such as the future 5G cellular communication system.

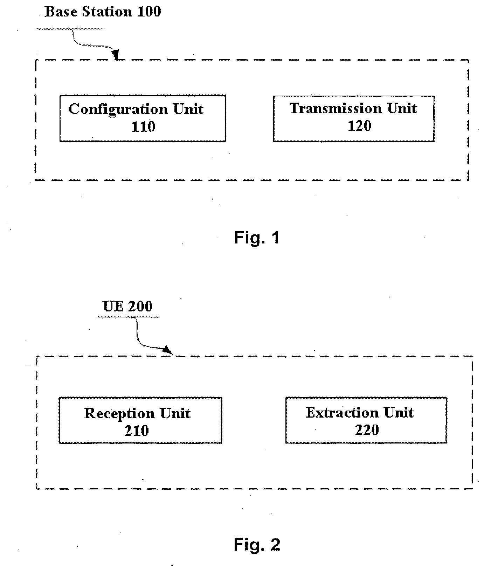

Fig. 1 is a block diagram of a base station 100 according to an embodiment of the present disclosure. As shown in Fig. 1, the base station 100 includes a configuration unit 110 and a transmission unit 120. It can be appreciated by those skilled in the art that the base station 100 further includes other functional units necessary for its functionality, e.g., various processors, memories and the like. However, details of such well-known elements will be omitted here for simplicity.

The configuration unit 110 can configure sizes of Random Access Response (RAR) windows for RARs having different coverage enhancement levels. The configuration unit 110 can also configure back-off indicators for different coverage enhancement levels of RARs. Further, the configuration unit 110 can configure other configuration information.

In the conventional LTE system, an RAR window refers to a time period having a length of ra-ResponseWindowSize subframes, starting with the subframe in which the UE transmits the preamble sequence + 3 subframes. After transmitting the preamble sequence, the UE needs to monitor PDCCH within the RAR window for receiving an RAR message.

For an MTC UE with coverage enhancement, a number of repetitive transmissions are required for its uplink and downlink physical channels, in order to meet the requirements of coverage enhancement of the channels. UEs at different geographical locations need different degrees of channel coverage enhancement. In other words, UEs at different geographical locations need different numbers of repetitive transmissions for physical channels. Hence, the degrees of coverage enhancement of physical channels can be divided into a number of coverage enhancement levels. Physical channels having different coverage enhancement levels require different numbers of repetitive transmissions. For example, Physical Random Access Channels (PRACHs) can be divided into four coverage enhancement levels, CE0, CE1, CE2 and CE3. Each of the coverage enhancement levels of PRACHs corresponds to a PRACH repetition window having a fixed window length. Physical channels with different coverage enhancement levels have different window lengths of repetition windows. Each PRACH having a coverage enhancement level has an RAR having a corresponding coverage enhancement level. Each RAR having a coverage enhancement level corresponds to a repetition window having a fixed window length for Physical Downlink Shared Channel (PDSCH) carrying the RAR, or referred to as RAR repetition window for short. According to the invention, each RAR having a coverage enhancement level corresponds to a repetition window having a fixed window length for (E)PDCCH (M-PDCCH) for scheduling PDSCH carrying the RAR, or referred to as RAR repetition window for short. According to the invention, each RAR having a coverage enhancement level corresponds to a repetition window having a fixed window length for (E)PDCCH (M-PDCCH) for scheduling PDSCH carrying the RAR and a repetition window for the PDSCH scheduled by the M-PDCCH, or referred to as RAR repetition window for short.

Here, a repetition window refers to a time interval between the first transmission and the last transmission of data and/or signaling transmission at a particular coverage enhancement level.

An RAR repetition window refers to a time interval between the first transmission and the last transmission of an RAR transmission at a particular coverage enhancement level. Here, the RAR transmission includes an (E)PDCCH (M-PDCCH) for scheduling PDSCH carrying the RAR and the PDSCH scheduled by the M-PDCCH

A repetition window for a physical channel can be represented as a radio frame number + a subframe number of the first transmission of the physical channel and a radio frame number + a subframe number for the last transmission.

Alternatively, a repetition window for a physical channel can be represented as a radio frame number + a subframe number of the first transmission of the physical channel and the number of repetitive transmissions required for the physical channel.

Alternatively, a repetition window for a physical channel can be represented as a radio frame number + a subframe number of the first transmission of the physical channel, the number of repetitive transmissions required for the physical channel, and an available subframe indication for the physical channel. The available subframe indication for the physical channel can be implemented by means of bitmapping. That is, for a bit corresponding to a particular subframe, the bit being 1 indicates that the subframe is available for transmission of the physical channel, whereas the bit being 0 indicates that the subframe is unavailable for transmission of the physical channel.

An RAR window for an MTC UE with coverage enhancement can be represented as the number of repetition windows or subframes for PDSCH carrying the RAR.

According to the invention, , an RAR window for an MTC UE with coverage enhancement can be represented as the number of repetition windows or subframes for (E)PDCCH (M-PDCCH) for scheduling PDSCH carrying the RAR.

The size of RAR window represented as the number of repetition windows is shown in Table 2 below. In this case, the RAR window can be described as starting with the last subframe of a number of repetitive transmissions of a preamble sequence over PRACH by a UE + k subframes and having a length of ra-ResponseWindowSize-MTC repetition windows, where k is a constant which can be a preset value or can be configured by a base station.

The size of RAR window represented as the number of subframes is shown in Table 3 below. Unlike in the conventional LTE system, the value of subframe needs to be increased here. In this case, the RAR window can be described as starting with the last subframe of a number of repetitive transmissions of a preamble sequence over PRACH by a UE + k subframes and having a length of ra-ResponseWindowSize-MTC subframes, where k is a constant which can be a preset value or can be configured by a base station.

The base station can configure the same or different sizes of RAR windows for different coverage enhancement levels of RARs (or different coverage enhancement levels of PRACHs). The base station can also configure the same or different back-off time parameter tables for different coverage enhancement levels of PRACHs (or different coverage enhancement levels of PRACHs).

## Table 2 - RACH-ConfigCommon Information Element

```
-- ASN1START

RACH-ConfigCommon ::=          SEQUENCE {
     preambleInfo                        SEQUENCE {
          numberOfRA-Preambles                ENUMERATED {
                                                   n4, n8, n12, n16 ,n20, n24, n28,
                                                   n32, n36, n40, n44, n48, n52, n56,
                                                   n60, n64},
          preamblesGroupAConfig               SEQUENCE {
               sizeOfRA-PreamblesGroupA            ENUMERATED {
                                                        n4, n8, n12, n16 ,n20, n24, n28,
                                                        n32, n36, n40, n44, n48, n52, n56,
                                                        n60},
               messageSizeGroupA                   ENUMERATED {b56, b144, b208, b256},
               messagePowerOffsetGroupB            ENUMERATED {
                                                        minusinfinity, dB0, dB5, dB8, dB10, dB12,
                                                        dB15, dB18},
               ...
          }             OPTIONAL                                                        -- Need OP
     },
     powerRampingParameters              PowerRampingParameters,
     ra-SupervisionInfo                  SEQUENCE {
          preambleTransMax                    PreambleTransMax,
          ra-ResponseWindowSize               ENUMERATED {
                                                   sf2, sf3, sf4, sf5, sf6, sf7,
                                                   sf8, sf10},
ra-ResponseWindowSize-MTC       ENUMERATED {rw2, rw3, rw4, rw5, rw6, rw7, rw8, rw10},
          mac-ContentionResolutionTimer       ENUMERATED {
                                                   sf8, sf16, sf24, sf32, sf40, sf48,
                                                   sf56, sf64}
     },
     maxHARQ-Msg3Tx                      INTEGER (1..8),
     ...
}

RACH-ConfigCommonSCell-r11 ::=       SEQUENCE {
     powerRampingParameters-r11           PowerRampingParameters,
     ra-SupervisionInfo-r11               SEQUENCE {
          preambleTransMax-r11                 PreambleTransMax
     },
     ...
}

PowerRampingParameters ::=            SEQUENCE {
     powerRampingStep                     ENUMERATED {dB0, dB2, dB4, dB6},
     preambleInitialReceivedTargetPower   ENUMERATED {
                                               dBm-120, dBm-118, dBm-116, dBm-114, dBm-112,
                                               dBm-110, dBm-108, dBm-106, dBm-104, dBm-102,
                                               dBm-100, dBm-98, dBm-96, dBm-94,
                                               dBm-92, dBm-90}
}

PreambleTransMax ::=                  ENUMERATED {
                                               n3, n4, n5, n6, n7, n8, n10, n20, n50,
                                               n100, n200}

-- ASN1STOP
```

| RACH-ConfigCommon Field Description |
|---|
| ... |
| **ra-ResponseWindowSize**<br>Duration of RAR window. In 3GPP TS 36.321. its value is indicated in units of subframes. The value sf2 corresponds to 2 subframes; the value sf3 corresponds to 3 subframes, and so on. The same value applies to each serving cell (although associated functions are performed individually for each cell). |
| **ra-ResponseWindowSize-MTC** |

(continued)

| RACH-ConfigCommon Field Description |
|---|
| Duration of RAR window. In 3GPP TS 36.321. its value is indicated in units of repetition windows. The value rw2 corresponds to 2 repetition windows; the value rw3 corresponds to 3 repetition windows, and so on. The same value applies to each repetition level (although associated functions are performed individually for each repetition level). |
| ... |

## Table 3 - RACH-ConfigCommon Information Element

```
-- ASN1START

RACH-ConfigCommon ::=        SEQUENCE {
    preambleInfo                    SEQUENCE {
        numberOfRA-Preambles            ENUMERATED {
                                            n4, n8, n12, n16 ,n20, n24, n28,
                                            n32, n36, n40, n44, n48, n52, n56,
                                            n60, n64},
        preamblesGroupAConfig           SEQUENCE {
            sizeOfRA-PreamblesGroupA        ENUMERATED {
                                                n4, n8, n12, n16 ;n20, n24, n28,
                                                n32, n36, n40, n44, n48, n52, n56,
                                                n60},
            messageSizeGroupA               ENUMERATED {b56, b144, b208, b256},
            messagePowerOffsetGroupB        ENUMERATED {
                                                minusinfinity, dB0, dB5, dB8, dB10, dB12,
                                                dB15, dB18},
            ...
        }           OPTIONAL                                             -- Need OP
    },
    powerRampingParameters          PowerRampingParameters,
    ra-SupervisionInfo              SEQUENCE {
        preambleTransMax                PreambleTransMax,
        ra-ResponseWindowSize           ENUMERATED {
                                            sf2, sf3, sf4, sf5, sf6, sf7,
                                            sf8, sf10},
ra-ResponseWindowSize-MTC       ENUMERATED {sf20, sf50, sf80, sf120, sf160, sf200,
sf250, sf300},
        mac-ContentionResolutionTimer   ENUMERATED {
                                            sf8, sf16, sf24, sf32, sf40, sf48,
                                            sf56, sf64}
    },
    maxHARQ-Msg3Tx                  INTEGER (1..8),
    ...
}

RACH-ConfigCommonSCell-r11 ::=      SEQUENCE {
    powerRampingParameters-r11          PowerRampingParameters,
    ra-SupervisionInfo-r11              SEQUENCE {
        preambleTransMax-r11                PreambleTransMax
    },
    ...
}

PowerRampingParameters ::=          SEQUENCE {
    powerRampingStep                    ENUMERATED {dB0, dB2,dB4, dB6},
    preambleInitialReceivedTargetPower  ENUMERATED {
                                            dBm-120, dBm-118, dBm-116, dBm-114, dBm-112,
                                            dBm-110, dBm-108, dBm-106, dBm-104, dBm-102,
                                            dBm-100, dBm-98, dBm-96, dBm-94,
                                            dBm-92, dBm-90}
}

PreambleTransMax ::=                ENUMERATED {
                                        n3, n4, n5, n6, n7, n8, n10, n20, n50,
                                        n100, n200}

-- ASN1STOP
```

| RACH-ConfigCommon Field Description |
| --- |
| ... |
| *ra-ResponseWindowSize*<br>Duration of RAR window. In 3GPP TS 36.321. its value is indicated in units of subframes. The value sf2 corresponds to 2 subframes; the value sf3 corresponds to 3 subframes, and so on. The same value applies to each serving cell (although associated functions are performed individually for each cell). |
| **ra-ResponseWindowSize-MTC**<br>Duration of RAR window. In 3GPP TS 36.321. its value is indicated in units of subframes. The value sf20 corresponds to 20 subframes; the value sf50 corresponds to 50 subframes, and so on. The same value applies to each repetition level (although associated functions are performed individually for each repetition level). |
| ... |

After receiving the random access preamble sequence transmitted from the UE, the transmission unit 120 transmits a Media Access Control (MAC) Protocol Data Unit (PDU) of an RAR repeatedly for a number of times over an RAR repetition window within an RAR window that corresponds to the RAR preamble sequence, starts with the last subframe of the last one or more repetitive receptions of the preamble sequence by the base station over PRACH + k subframes and has ra-ResponseWindowSize-MTC RAR repetition windows, where k is a constant which can be a preset value or can be configured by the base station. Each MAC PDU consists of one MAC header, zero or more MAC RARs and an optional padding field. The exact number of repetitive transmissions is dependent on the number of repetitive transmissions configured for the repetition window of the coverage enhancement level.

Alternatively, after receiving the random access preamble sequence transmitted from the UE, the transmission unit 120 transmits a Media Access Control (MAC) Protocol Data Unit (PDU) of an RAR repeatedly for a number of times over one of n RAR repetition windows within an RAR window that corresponds to the RAR preamble sequence, starts with the last subframe of the last one or more repetitive receptions of the preamble sequence by the base station over PRACH + k subframes and has ra-ResponseWindowSize-MTC subframes, where k is a constant which can be a preset value or can be configured by the base station and n is an integer value depending on ra-ResponseWindowSize-MTC, the window length of the RAR repetition window and an interval between two neighboring RAR repetition windows. Each MAC PDU consists of one MAC header, zero or more MAC RARs and an optional padding field. The exact number of repetitive transmissions is dependent on the number of repetitive transmissions configured for the repetition window of the coverage enhancement level.

Fig. 2 is a block diagram of a UE 200 according to an embodiment of the present disclosure. As shown in Fig. 2, the UE 200 includes a reception unit 210 and an extraction unit 220. It can be appreciated by those skilled in the art that the UE 200 further includes other functional units necessary for its functionality, e.g., various processors, memories and the like. However, details of such well-known elements will be omitted here for simplicity.

According to the invention, in the reception unit 210, after transmitting a random access preamble sequence, the UE monitors (E)PDCCH (M-PDCCH) or PDSCH for an RAR over ra-ResponseWindowSize-MTC RAR repetition windows within an RAR window that corresponds to the RAR preamble sequence, starts with the last subframe of the last one or more repetitive transmissions of the preamble sequence by the UE over PRACH + k subframes and has ra-ResponseWindowSize-MTC RAR repetition windows, where k is a constant which can be a preset value or can be configured by the base station. Each MAC PDU consists of one MAC header, zero or more MAC RARs and an optional padding field. The exact number of repetitive transmissions is dependent on the number of repetitive transmissions configured for the repetition window of the coverage enhancement level.

The (E)PDCCH (M-PDCCH) refers to (E)PDCCH (M-PDCCH) for scheduling the PDSCH carrying the RAR message. The (E)PDCCH can be an EPDCCH defined in the conventional LTE system or a newly designed narrow band PDCCH (M-PDCCH).

The PDSCH is a PDSCH carrying the RAR message without being scheduled by an (E)PDCCH (M-PDCCH). In this case, without scheduling by (E)PDCCH (M-PDCCH), the UE can directly monitor the PDSCH carrying the RAR message.

Alternatively, in the reception unit 210, after transmitting a random access preamble sequence, the UE monitors (E)PDCCH (M-PDCCH) or PDSCH for an RAR over n RAR repetition windows within an RAR window that corresponds to the RAR preamble sequence, starts with the last subframe of the last one or more repetitive transmissions of the preamble sequence by the UE over PRACH + k subframes and has ra-ResponseWindowSize-MTC RAR subframes, where k is a constant which can be a preset value or can be configured by the base station and n is an integer value depending on ra-ResponseWindowSize-MTC, the window length of the RAR repetition window and an interval between two neighboring RAR repetition windows. Each MAC PDU consists of one MAC header, zero or more MAC RARs and an optional padding field. The exact number of repetitive transmissions is dependent on the number of repetitive transmissions configured for the repetition window of the coverage enhancement level.

The (E)PDCCH (M-PDCCH) refers to (E)PDCCH (M-PDCCH) for scheduling the PDSCH carrying the RAR message. The (E)PDCCH (M-PDCCH) can be an EPDCCH defined in the conventional LTE system or a newly designed narrow band PDCCH (M-PDCCH).

The PDSCH is a PDSCH carrying the RAR message without being scheduled by an (E)PDCCH (M-PDCCH). In this case, without scheduling by (E)PDCCH (M-PDCCH), the UE can directly monitor the PDSCH carrying the RAR message.

In the extraction unit 220, the UE reads configuration information of a size of the RAR window and/or back-off indication information based on a coverage enhancement level of its RAR. Alternatively, the UE reads configuration information of a size of the RAR window and back-off indication information based on a coverage enhancement level of PRACH over which the UE transmits the random access preamble sequence.

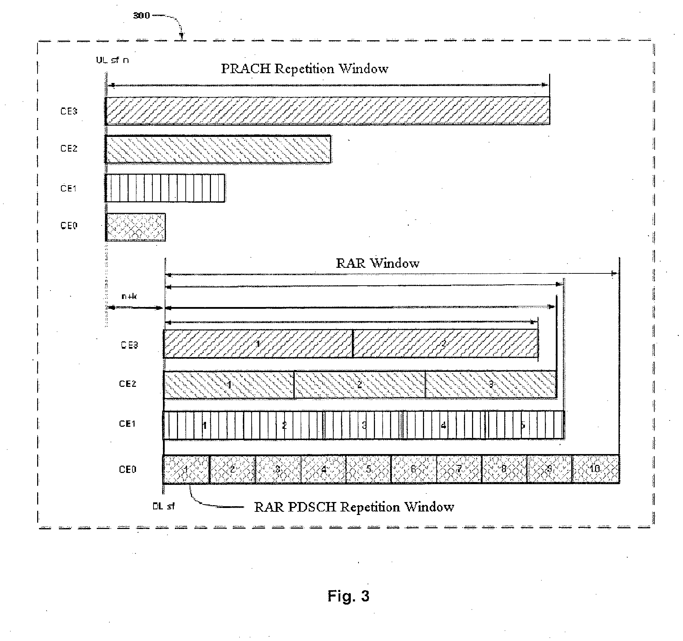

In the following, examples of different sizes of RAR windows configured for different coverage enhancement levels of repetition windows (subframes) according to an embodiment of the present disclosure will be described with reference to Figs. 3-6.

Fig. 3 is a schematic diagram showing different sizes of RAR windows configured for different coverage enhancement levels of repetition windows according to the present disclosure. In this embodiment, PRACHs are divided into four coverage enhancement levels, CE0, CE1, CE2 and CE3. Each of the coverage enhancement levels corresponds to a PRACH repetition window having a fixed window length. Each PRACH having a coverage enhancement level has an RAR having a corresponding coverage enhancement level. Each RAR having a coverage enhancement level corresponds to an RAR repetition window having a fixed window length.

The base station 100 can configure different sizes of RAR windows for different coverage enhancement levels of RARs (or different coverage enhancement levels of PRACHs). In the example shown in Fig. 3, the size of an RAR window refers to the number of RAR repetition windows. For example, the base station 100 can configure a size 10 of RAR window for the coverage enhancement level CE0 of RAR, i.e., 10 RAR repetition windows for this coverage enhancement level. Accordingly, 5 can be configured for CE1 (i.e., 5 RAR repetition windows for this coverage enhancement level), 3 for CE2 (i.e., 3 RAR repetition windows for this coverage enhancement level) and 2 for CE3 (i.e., 2 RAR repetition windows for this coverage enhancement level).

The configuration information for the size of the RAR window can be preconfigured or can be notified to the MTC UE via MIB (Master Information Block) or SIBx (System Information Block, SIB, 1, and/or SIB2 and/or other SIBs), MAC PDU, or dedicated RRC signaling.

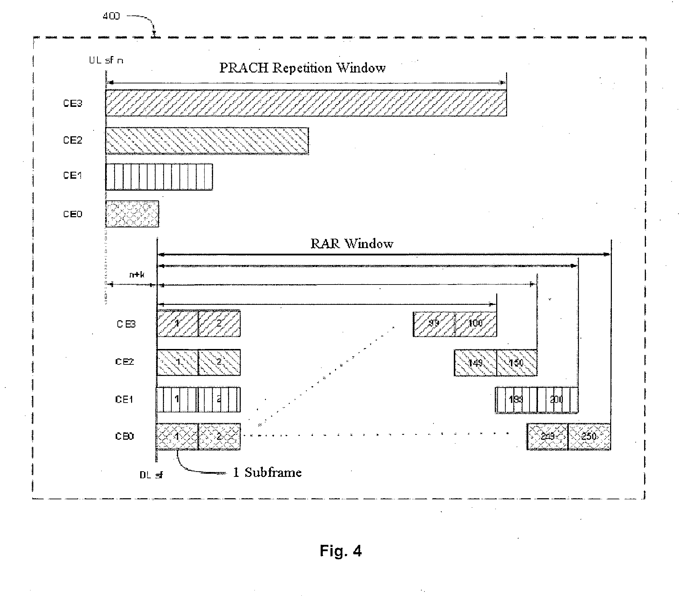

Fig. 4 is a schematic diagram showing different sizes of RAR windows configured for different coverage enhancement levels of subframes according to the present disclosure. As shown in Fig. 4, PRACHs are divided into four coverage enhancement levels, CE0, CE1, CE2 and CE3. Each of the coverage enhancement levels corresponds to a PRACH repetition window having a fixed window length. Each PRACH having a coverage enhancement level has an RAR having a corresponding coverage enhancement level. Each RAR having a coverage enhancement level corresponds to an RAR repetition window having a fixed window length.

The base station 100 can configure different sizes of RAR windows for different coverage enhancement levels of RARs (or different coverage enhancement levels of PRACHs). In the example shown in Fig. 4, the size of an RAR window refers to the number of downlink subframes. For example, the base station 100 can configure a size 250 of RAR window for the coverage enhancement level CE0 of RAR, i.e., 250 downlink subframes. Accordingly, 200 can be configured for CE1 (i.e., 200 downlink subframes), 150 for CE2 (i.e., 150 downlink subframes) and 100 for CE3 (i.e., 100 downlink subframes).

The configuration information for the size of the RAR window can be preconfigured or can be notified to the MTC UE via MIB (Master Information Block) or SIBx (System Information Block, SIB, 1, and/or SIB2 and/or other SIBs), MAC PDU, or dedicated RRC signaling.

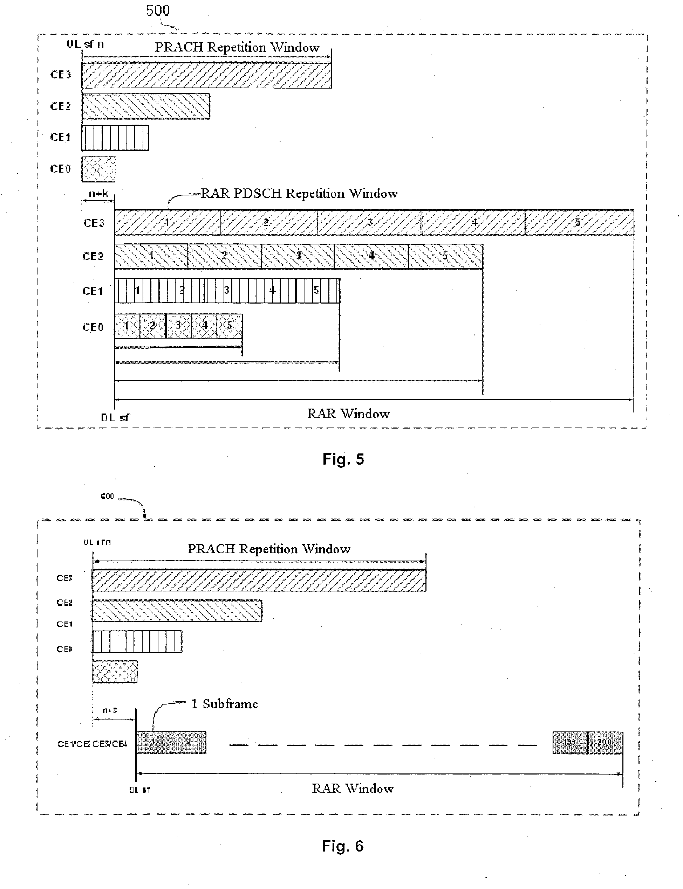

Fig. 5 is a schematic diagram showing the same size of RAR windows configured for different coverage enhancement levels of repetition windows according to an present disclosure. As shown in Fig. 5, PRACHs are divided into four coverage enhancement levels, CE0, CE1, CE2 and CE3. Each of the coverage enhancement levels corresponds to a PRACH repetition window having a fixed window length. Each PRACH having a coverage enhancement level has an RAR having a corresponding coverage enhancement level. Each RAR having a coverage enhancement level corresponds to an RAR repetition window having a fixed window length.

The base station 100 can configure the same size of RAR windows for different coverage enhancement levels of RARs (or different coverage enhancement levels of PRACHs). In the example shown in Fig. 5, the size of an RAR window refers to the number of RAR repetition windows. For example, the base station 100 can configure a size 5 of RAR window for the coverage enhancement levels CE0/CE1/CE2/CE3 of RARs, i.e., 5 RAR repetition windows for the respective coverage enhancement levels.

The configuration information for the size of the RAR window can be preconfigured or can be notified to the MTC UE via MIB (Master Information Block) or SIBx (System Information Block, SIB, 1, and/or SIB2 and/or other SIBs), MAC PDU, or dedicated RRC signaling.

Fig. 6 is a schematic diagram showing the same size of RAR windows configured for different coverage enhancement levels of subframes according to the present disclosure. As shown in Fig. 6, PRACHs are divided into four coverage enhancement levels, CE0, CE1, CE2 and CE3. Each of the coverage enhancement levels corresponds to a PRACH repetition window having a fixed window length. Each PRACH having a coverage enhancement level has an RAR having a corresponding coverage enhancement level. Each RAR having a coverage enhancement level corresponds to an RAR repetition window having a fixed window length.

The base station 100 can configure the same of RAR windows for different coverage enhancement levels of RARs (or different coverage enhancement levels of PRACHs). In the example shown in Fig. 6, the size of an RAR window refers to the number of downlink subframes. For example, the base station 100 can configure a size 200 of RAR window for the coverage enhancement levels CE0/CE1/CE2/CE3 of RARs, i.e., 200 downlink subframes.

The configuration information for the size of the RAR window can be preconfigured or can be notified to the MTC UE via MIB (Master Information Block) or SIBx (System Information Block, SIB, 1, and/or SIB2 and/or other SIBs), MAC PDU, or dedicated RRC signaling.

In the conventional LTE system, after transmitting a random access preamble sequence, a UE monitors a PDCCH in an RAR window. If an RAR is detected (a corresponding PDCCH is detected using RA-RNTI), and no identifier of the random access preamble sequence transmitted by the UE itself, but instead a back-off indicator, is detected in the corresponding MAC PDU, it can be determined that the preamble sequence has been detected by the eNB, but there is more than one preamble sequence using the same time-frequency resources to transmit random access requests (the respective UEs have the same RA-RNTI). In this case, the UE sets its back-off time to a value indicated by the back-off indicator and notifies the upper layer of failure of the random access attempt. If the notification of failure of the random access attempt is received by the upper layer and the number of retransmissions has not reached the specified upper limit, the UE selects a time delay randomly in the range from 0 to the back-off time period for retransmitting the random access preamble sequence. For example, the value of the back-off parameter is measured in units of milliseconds (subframes), as shown in Table 4 below.

Table 4

| Index | Back-off Parameter Value (ms) |
|---|---|
| 0 | 0 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | Reserved |
| 14 | Reserved |
| 15 | Reserved |

For an MTC UE with coverage enhancement, a PRACH needs to be transmitted repeatedly for a number of times, so as to meet the requirements of its coverage enhancement level. PRACHs having different coverage enhancement levels require different numbers of repetitive transmissions, i.e., different window lengths of PRACH repetition windows. For example, as shown in Fig. 3, four coverage enhancement levels of PRACHs have four different window lengths of repetition windows. The MTC UE with coverage enhancement can use a back-off mechanism similar to that in the conventional LTE system. The specific implementations will be described below.

Implementation 1 - As shown in Table 4, the parameter values in the back-off time parameter table are measured in units of milliseconds (ms).

MTC UEs having different coverage enhancement levels of PRACHs can use the same back-off time parameter table. However, MTC UEs having different coverage enhancement levels of PRACHs can configure the same or different back-off time. The back-off time parameter table can be the parameter table in the conventional LTE system (e.g., Table 4), or can be a newly designed parameter table.

Alternatively, MTC UEs having different coverage enhancement levels of PRACHs can use different back-off time parameter tables. For example, the coverage enhancement level CE0 of PRACH can use the conventional table (Table 1), whereas the other coverage enhancement levels may have newly designed back-off time parameter tables.

Alternatively, all the coverage enhancement levels of PRACHs can be divided into a number of groups and MTC UEs belonging to different groups use different back-off time parameter tables. For example, four coverage enhancement levels of PRACHs can be divided into two groups, Group 1 containing CE0 and CE1, and Group 2 containing CE2 and CE3. Group 1 and Group 2 use different back-off time parameter tables.

Implementation 2 - As shown in Table 5, the parameter values in the back-off time parameter table are measured in units of PRACH repetition windows.

MTC UEs having different coverage enhancement levels of PRACHs can use the same back-off time parameter table. However, MTC UEs having different coverage enhancement levels of PRACHs can configure the same or different back-off time.

Alternatively, MTC UEs having different coverage enhancement levels of PRACHs can use different back-off time parameter tables. For example, the coverage enhancement level CE0 of PRACH can use Table 5 as its back-off time parameter table, whereas the other coverage enhancement levels may have newly designed back-off time parameter tables.

Alternatively, all the coverage enhancement levels of PRACHs can be divided into a number of groups and MTC UEs belonging to different groups use different back-off time parameter tables. For example, four coverage enhancement levels of PRACHs can be divided into two groups, Group 1 containing CE0 and CE1, and Group 2 containing CE2 and CE3. Group 1 and Group 2 use different back-off time parameter tables.

Table 5

| Index | Back-off Parameter Value (rw) |
|---|---|
| 0 | 0 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | Reserved |
| 14 | Reserved |
| 15 | Reserved |
| Note: rw represents the number of PRACH repetition windows | |

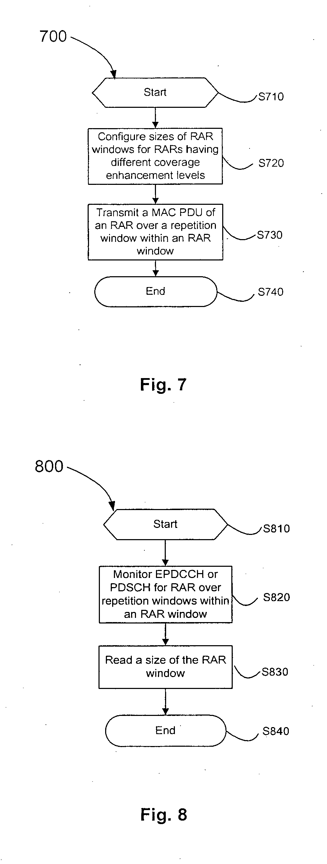

Fig. 7 is a flowchart illustrating a method performed by a base station according to the present disclosure. As shown in Fig. 7, the method 700 starts with step S710.

At step S720, the base station can configure the same or different sizes of RAR windows for different coverage enhancement levels of RARs (or different coverage enhancement levels of PRACHs). The base station can also configure the same or different back-off time parameter tables for different coverage enhancement levels of PRACHs (or different coverage enhancement levels of PRACHs). Preferably, a size of an RAR window is represented as a number of RAR repetition windows.

At step S730, preferably, after receiving the random access preamble sequence transmitted from the UE, the base station transmits a Media Access Control (MAC) Protocol Data Unit (PDU) of an RAR repeatedly for a number of times over an RAR repetition window within an RAR window that corresponds to the RAR preamble sequence, starts with the last subframe of the last one or more repetitive receptions of the preamble sequence by the base station over PRACH + k subframes and has ra-ResponseWindowSize-MTC RAR repetition windows, where k is a constant which can be a preset value or can be configured by the base station. Each MAC PDU consists of one MAC header, zero or more MAC RARs and an optional padding field. The exact number of repetitive transmissions is dependent on the number of repetitive transmissions configured for the repetition window of the coverage enhancement level.

At step S730, alternatively, after receiving the random access preamble sequence transmitted from the UE, the base station transmits a Media Access Control (MAC) Protocol Data Unit (PDU) of an RAR repeatedly for a number of times over one of n RAR repetition windows within an RAR window that corresponds to the RAR preamble sequence, starts with the last subframe of the last one or more repetitive receptions of the preamble sequence by the base station over PRACH + k subframes and has ra-ResponseWindowSize-MTC subframes, where k is a constant which can be a preset value or can be configured by the base station and n is an integer value depending on ra-ResponseWindowSize-MTC, the window length of the RAR repetition window and an interval between two neighboring RAR repetition windows. Each MAC PDU consists of one MAC header, zero or more MAC RARs and an optional padding field. The exact number of repetitive transmissions is dependent on the number of repetitive transmissions configured for the repetition window of the coverage enhancement level.

Preferably, different sizes of RAR windows can be configured for different coverage enhancement levels of RARs. Alternatively, the same size of RAR windows can be configured for different coverage enhancement levels of RARs Preferably, different coverage enhancement levels of Physical Random Access Channels (PRACHs) have the same or different back-off time parameter tables. Here, values in each back-off time parameter table can be measured in units of PRACH repetition windows.

Finally, the method 700 ends with step S740.

Fig. 8 is a flowchart illustrating a method performed by a UE according to the present disclosure. As shown in Fig. 8, the method 800 starts with step S810.

At step S820, the UE reads configuration information of a size of the RAR window and/or back-off indication information based on a coverage enhancement level of its RAR. Alternatively, the UE reads configuration information of a size of the RAR window and/or back-off indication information based on a coverage enhancement level of PRACH over which the UE transmits the random access preamble sequence.

At step S830, preferably, after transmitting a random access preamble sequence, the UE monitors (E)PDCCH (M-PDCCH) or PDSCH for an RAR over ra-ResponseWindowSize-MTC RAR repetition windows within an RAR window that corresponds to the RAR preamble sequence, starts with the last subframe of the last one or more repetitive transmissions of the preamble sequence by the UE over PRACH + k subframes and has ra-ResponseWindowSize-MTC RAR repetition windows, where k is a constant which can be a preset value or can be configured by the base station. Each MAC PDU consists of one MAC header, zero or more MAC RARs and an optional padding field. The exact number of repetitive transmissions is dependent on the number of repetitive transmissions configured for the repetition window of the coverage enhancement level.

The (E)PDCCH (M-PDCCH) refers to (E)PDCCH (M-PDCCH) for scheduling the PDSCH carrying the RAR message. The (E)PDCCH can be an EPDCCH defined in the conventional LTE system or a newly designed narrow band PDCCH (M-PDCCH).

The PDSCH is a PDSCH carrying the RAR message without being scheduled by an (E)PDCCH (M-PDCCH). In this case, without scheduling by (E)PDCCH (M-PDCCH), the UE can directly monitor the PDSCH carrying the RAR message.

At step S830, alternatively, after transmitting a random access preamble sequence, the UE monitors (E)PDCCH (M-PDCCH) or PDSCH for an RAR over n RAR repetition windows within an RAR window that corresponds to the RAR preamble sequence, starts with the last subframe of the last one or more repetitive transmissions of the preamble sequence by the UE over PRACH + k subframes and has ra-ResponseWindowSize-MTC RAR subframes, where k is a constant which can be a preset value or can be configured by the base station and n is an integer value depending on ra-ResponseWindowSize-MTC, the window length of the RAR repetition window and an interval between two neighboring RAR repetition windows. Each MAC PDU consists of one MAC header, zero or more MAC RARs and an optional padding field. The exact number of repetitive transmissions is dependent on the number of repetitive transmissions configured for the repetition window of the coverage enhancement level.

The (E)PDCCH (M-PDCCH) refers to (E)PDCCH (M-PDCCH) for scheduling the PDSCH carrying the RAR message. The (E)PDCCH (M-PDCCH) can be an EPDCCH defined in the conventional LTE system or a newly designed narrow band PDCCH (M-PDCCH).

The PDSCH is a PDSCH carrying the RAR message without being scheduled by an (E)PDCCH (M-PDCCH). In this case, without scheduling by (E)PDCCH (M-PDCCH), the UE can directly monitor the PDSCH carrying the RAR message.

Preferably, different coverage enhancement levels of Physical Random Access Channels (PRACHs) have the same or different back-off time parameter tables. Here, values in each back-off time parameter table can be measured in units of PRACH repetition windows.

Finally, the method 800 ends with step S840.

It can be appreciated that the above embodiments of the present disclosure can be implemented in software, hardware or any combination thereof. For example, the internal components of the base station and the UE in the above embodiments can be implemented using various devices including, but not limited to, analog circuit device, digital circuit device, Digital Signal Processing (DSP) circuit, programmable processor, Application Specific Integrated Circuit (ASIC), Field Programmable Gate Array (FPGA), Programmable Logic Device (CPLD) and the like.

Further, the embodiments of the present disclosure can be implemented in computer program products. More specifically, a computer program product can be a product having a computer readable medium with computer program logics coded.thereon. When executed on a computing device, the computer program logics provide operations for implementing the above solutions according to the present disclosure. When executed on at least one processor in a computing system, the computer program logics cause the processor to perform the operations (methods) according to the embodiments of the present disclosure. This arrangement of the present disclosure is typically provided as software, codes and/or other data structures provided or coded on a computer readable medium (such as an optical medium, e.g., CD-ROM, a floppy disk or a hard disk), or firmware or micro codes on other mediums (such as one or more ROMs, RAMs or PROM chips), or downloadable software images or shared databases in one or more modules. The software, firmware or arrangement can be installed in a computing device to cause one or more processors in the computing device to perform the solutions according to the embodiments of the present disclosure.

## Claims

1. A User Equipment, UE (200), comprising:

   a reception unit (210) configured to receive a configuration configuring a random access response window size per enhanced coverage level, and
   an extraction unit (220) configured to read the configuration,
   wherein the reception unit (210) is further configured to monitor PDCCH for a random access response within a random access response window of the random access response window size,
   wherein the random access response window is represented as a number of repetition windows for the PDCCH based on the read configuration; and
   the number of repetition windows for the PDCCH is any of 2, 3, 4, 5, 6, 7, 8, and 10, determined by the read configuration.

2. The UE (200) of claim 1, wherein values of random access response window sizes for coverage enhancement are larger than values of random access response window sizes for non-coverage enhancement.

3. A base station (100), comprising:

   a configuration unit (110) configured to configure a configuration of a random access response window size per enhanced coverage level, and
   a transmission unit (120) configured to transmit the configuration,
   wherein the transmission unit (120) is further configured to transmit a Media Access Control Protocol Data Unit of a random access response repeatedly for a number of times over a random access response repetition window of PDCCH having the random access response window size as configured,
   wherein the random access response window is represented as a number of repetition windows for the PDCCH based on the configuration; and
   the number of repetition windows for the PDCCH is any of 2, 3, 4, 5, 6, 7, 8, and 10, determined by the configuration.

**4.** The base station (100) of claim 3, wherein values of random access response window sizes for coverage enhancement are larger than values of random access response window sizes for non-coverage enhancement.

**5.** A method performed by a User Equipment, UE (200), comprising:

receiving a configuration configuring a random access response window size per enhanced coverage level, and reading the configuration,
wherein PDCCH for a random access response is monitored within a random access response window of the random access response window size,
wherein the random access response window is represented as a number of repetition windows for the PDCCH based on the read configuration; and
the number of repetition windows for the PDCCH is any of 2, 3, 4, 5, 6, 7, 8, and 10, determined by the read configuration.

**6.** A method performed by a base station (100), comprising:

configuring a configuration of a random access response window size per enhanced coverage level, and transmitting the configuration,
wherein a Media Access Control Protocol Data Unit of a random access response is transmitted repeatedly for a number of times over a random access response repetition window of PDCCH having the random access response window size as configured,
wherein the random access response window is represented as a number of repetition windows for the PDCCH based on the configuration; and
the number of repetition windows for the PDCCH is any of 2, 3, 4, 5, 6, 7, 8, and 10, determined by the configuration.

**Patentansprüche**

**1.** Nutzerendgerät, UE, (200), aufweisend:

eine Empfangseinheit (210), die konfiguriert ist, eine Konfiguration zu empfangen, die eine Direktzugriffsantwortfenstergröße pro verbessertem Abdeckungspegel konfiguriert, und
eine Extraktionseinheit (220), die konfiguriert ist, die Konfiguration auszulesen,
wobei die Empfangseinheit (210) ferner konfiguriert ist, PDCCH innerhalb eines Direktzugriffsantwortfensters der Direktzugriffsantwortfenstergröße auf eine Direktzugriffsantwort zu überwachen;
wobei das Direktzugriffsantwortfenster basierend auf der gelesenen Konfiguration als eine Anzahl von Wiederholungsfenstern für den PDCCH dargestellt wird; und
die Anzahl von Wiederholungsfenstern für den PDCCH, bestimmt durch die gelesene Konfiguration, eine beliebige aus 2, 3, 4, 5, 6, 7, 8 und 10 ist.

**2.** Nutzerendgerät (200) Anspruch 1, wobei Werte von Direktzugriffsantwortfenstergrößen zur Abdeckungsverbesserung größer sind als Werte von Direktzugriffsantwortfenstergrößen zur Verbesserung von Nicht-Abdeckung.

**3.** Basisstation (100), aufweisend:

eine Konfigurationseinheit (110), die konfiguriert ist, eine Konfiguration einer Direktzugriffsantwortfenstergröße pro verbessertem Abdeckungspegel zu konfigurieren, und
eine Sendeeinheit (120), die konfiguriert ist, die Konfiguration zu senden,
wobei die Sendeeinheit (120) ferner konfiguriert ist, eine Media Access Control Protocol Data Unit einer Direktzugriffsantwort wiederholt für eine Anzahl von Malen über ein Direktzugriffsantwortwiederholungsfenster eines PDCCH mit der so konfigurierten Direktzugriffsantwortfenstergröße zu senden,
wobei das Direktzugriffsantwortfenster basierend auf der Konfiguration als eine Anzahl von Wiederholungsfenstern für den PDCCH dargestellt wird; und
die Anzahl von Wiederholungsfenstern für den PDCCH, bestimmt durch die Konfiguration, eine beliebige aus 2, 3, 4, 5, 6, 7, 8 und 10 ist.

4. Basisstation (100) nach Anspruch 3, wobei Werte von Direktzugriffsantwortfenstergrößen zur Abdeckungsverbesserung größer sind als Werte von Direktzugriffsantwortfenstergrößen zur Verbesserung von Nicht-Abdeckung.

5. Verfahren, das von einem Nutzerendgerät, UE (200), durchgeführt wird, umfassend:

   Empfangen einer Konfiguration, die eine Direktzugriffsantwortfenstergröße pro verbessertem Abdeckungspegel konfiguriert, und
   Lesen der Konfiguration,
   wobei PDCCH für eine Direktzugriffsantwort innerhalb eines Direktzugriffsantwortfensters der Direktzugriffsantwortfenstergröße überwacht wird,
   wobei das Direktzugriffsantwortfenster basierend auf der gelesenen Konfiguration als eine Anzahl von Wiederholungsfenstern für den PDCCH dargestellt wird; und
   die Anzahl von Wiederholungsfenstern für den PDCCH, bestimmt durch die gelesene Konfiguration, eine beliebige aus 2, 3, 4, 5, 6, 7, 8 und 10 ist.

6. Verfahren, welches von einer Basisstation (100) durchgeführt wird, umfassend:

   Konfigurieren einer Konfiguration einer Direktzugriffsantwortfenstergröße pro verbessertem Abdeckungspegel, und
   Senden der Konfiguration,
   wobei eine Media Access Control Protocol Data Unit einer Direktzugriffsantwort wiederholt für eine Anzahl von Malen über ein Direktzugriffsantwortwiederholungsfenster eines PDCCH mit der so konfigurierten Direktzugriffsantwortfenstergröße gesendet wird,
   wobei das Direktzugriffsantwortfenster basierend auf der Konfiguration als eine Anzahl von Wiederholungsfenstern für den PDCCH dargestellt wird; und
   die Anzahl von Wiederholungsfenstern für den PDCCH, bestimmt durch die Konfiguration, eine beliebige aus 2, 3, 4, 5, 6, 7, 8 und 10 ist.

**Revendications**

1. Équipement utilisateur, UE (200), comprenant :

   une unité de réception (210) configurée pour recevoir une configuration configurant une taille de fenêtre de réponse d'accès aléatoire par niveau de couverture amélioré, et
   une unité d'extraction (220) configurée pour lire la configuration,
   dans lequel l'unité de réception (210) est en outre configurée pour surveiller le PDCCH pour une réponse d'accès aléatoire dans une fenêtre de réponse d'accès aléatoire de la taille de la fenêtre de réponse d'accès aléatoire,
   dans lequel la fenêtre de réponse d'accès aléatoire est représentée comme un nombre de fenêtres de répétition pour le PDCCH sur la base de la configuration lue ; et
   le nombre de fenêtres de répétition pour le PDCCH est l'un quelconque parmi 2, 3, 4, 5, 6, 7, 8 et 10, déterminé par la configuration lue.

2. UE (200) selon la revendication 1, dans lequel les valeurs des tailles des fenêtres de réponse d'accès aléatoire pour l'amélioration de la couverture sont plus grandes que les valeurs des tailles des fenêtres de réponse d'accès aléatoire pour l'amélioration de la non-couverture.

3. Station de base (100), comprenant :

   une unité de configuration (110) configurée pour configurer une configuration d'une taille de fenêtre de réponse d'accès aléatoire par niveau de couverture amélioré, et
   une unité de transmission (120) configurée pour transmettre la configuration,
   dans lequel l'unité de transmission (120) est en outre configurée pour transmettre une unité de données de protocole de contrôle d'accès médias d'une réponse d'accès aléatoire de manière répétée un certain nombre de fois sur une fenêtre de répétition de réponse d'accès aléatoire de PDCCH ayant la taille de fenêtre de réponse d'accès aléatoire telle que configurée,
   dans lequel la fenêtre de réponse d'accès aléatoire est représentée comme un nombre de fenêtres de répétition pour le PDCCH sur la base de la configuration ; et

le nombre de fenêtres de répétition pour le PDCCH est l'un quelconque parmi 2, 3, 4, 5, 6, 7, 8 et 10, déterminé par la configuration.

4. Station de base (100) selon la revendication 3, dans laquelle les valeurs des tailles de fenêtres de réponse d'accès aléatoire pour l'amélioration de la couverture sont plus grandes que les valeurs des tailles de fenêtres de réponse d'accès aléatoire pour l'amélioration de la non-couverture.

5. Procédé exécuté par un équipement utilisateur, UE (200), comprenant :

la réception d'une configuration configurant une taille de fenêtre de réponse d'accès aléatoire par niveau de couverture amélioré, et
la lecture de la configuration,
dans lequel le PDCCH pour une réponse d'accès aléatoire est surveillé dans une fenêtre de réponse d'accès aléatoire de la taille de fenêtre de réponse d'accès aléatoire,
dans lequel la fenêtre de réponse d'accès aléatoire est représentée comme un nombre de fenêtres de répétition pour le PDCCH sur la base de la configuration lue ; et
le nombre de fenêtres de répétition pour le PDCCH est l'un quelconque parmi 2, 3, 4, 5, 6, 7, 8, 15 et 10, déterminé par la configuration lue.

6. Procédé exécuté par une station de base (100), comprenant :

la configuration d'une configuration d'une taille de fenêtre de réponse d'accès aléatoire par niveau de couverture amélioré, et
la transmission de la configuration,
dans lequel une unité de données de protocole de contrôle d'accès médias d'une réponse d'accès aléatoire est transmise de manière répétée pendant un certain nombre de fois sur une fenêtre de répétition de réponse d'accès aléatoire de PDCCH ayant la taille de fenêtre de réponse d'accès aléatoire telle que configurée,
dans lequel la fenêtre de réponse d'accès aléatoire est représentée comme un nombre de fenêtres de répétition pour le PDCCH sur la base de la configuration ; et
le nombre de fenêtres de répétition pour le PDCCH est l'un quelconque parmi 2, 3, 4, 5, 6, 7, 8 et 10, déterminé par la configuration.

Base Station 100

```
┌─────────────────────────────────────────────────────┐
│                                                       │
│   ┌─────────────────────┐   ┌─────────────────────┐  │
│   │ Configuration Unit  │   │  Transmission Unit  │  │
│   │         110         │   │         120         │  │
│   └─────────────────────┘   └─────────────────────┘  │
│                                                       │
└─────────────────────────────────────────────────────┘
```

**Fig. 1**

UE 200

```
┌─────────────────────────────────────────────────────┐
│                                                       │
│   ┌─────────────────────┐   ┌─────────────────────┐  │
│   │   Reception Unit    │   │   Extraction Unit   │  │
│   │         210         │   │         220         │  │
│   └─────────────────────┘   └─────────────────────┘  │
│                                                       │
└─────────────────────────────────────────────────────┘
```

**Fig. 2**

Fig. 3

**Fig. 4**

Fig. 5

Fig. 6

700

Start — S710

Configure sizes of RAR
windows for RARs having
different coverage
enhancement levels — S720

Transmit a MAC PDU of
an RAR over a repetition
window within an RAR
window — S730

End — S740

**Fig. 7**

800

Start — S810

Monitor EPDCCH or
PDSCH for RAR over
repetition windows within
an RAR window — S820

Read a size of the RAR
window — S830

End — S840

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3131342 A1

- EP 3026830 A1

### Non-patent literature cited in the description

- **ERICSSON, NSN.** New Work Item on Even Lower Complexity and Enhanced Coverage LTE UE for MTC. *RP-140990*
- **LG ELECTRONICS.** RACH procedure for coverage enhancement of MTC UEs. *3GPP DRAFT; R1-134393 MTC_RACH FOR CE (FINAL), 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 07 October 2013, vol. RAN WG1 (Guangzhou

- **ERICSSON.** Impact of coverage enhancements on RAN. *3GPP DRAFT; R2-140675 - IMPACT OF COVERAGE ENHANCEMENTS ON RAN, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 10 February 2014, vol. RAN WG2 (Prague
- **ALCATEL-LUCENT et al.** Coverage enhancement for RACH messages. *3GPP DRAFT; R1-140153 - REL-12 MTC - CE FOR RACH MESSAGES V0.2, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE,* 10 February 2014, vol. RAN WG1 (Prague